# EUROPÄISCHE PATENTSCHRIFT

(11) **EP 2 121 522 B1**
(45) Veröffentlichungstag und Bekanntmachung des Hinweises auf die Patenterteilung: **28.03.2018**
(21) Anmeldenummer: 07857943.0
(22) Anmeldetag: 20.12.2007
(51) Int. Cl.: C01B 21/068, C01B 33/107, C01B 33/04, C01B 21/082, C01B 33/12, C01B 33/36, C01G 17/00, C07F 7/08, C07F 7/30, C01B 32/907

(54) **VERFAHREN ZUR HERSTELLUNG HÖHERER GERMANIUMVERBINDUNGEN**
METHOD FOR PRODUCING HIGHER GERMANES
PROCÉDÉ DE FABRICATION DE GERMANES SUPÉRIEURS

(30) Priorität: 14.02.2007 DE 102007007874
(43) Veröffentlichungstag der Anmeldung: 25.11.2009
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE)
(86) Internationale Anmeldenummer: PCT/EP2007/064322
(87) Internationale Veröffentlichungsnummer: WO 2008/098640

(56) Entgegenhaltungen:
- WO-A-2004/036631
- WO-A-2006/013129
- JP-A- S63 277 599
- US-A- 4 568 437
- US-A1- 2004 259 386
- S.D. GOKHALE, J.E. DRAKE, W.L. JOLLY: "Synthesis of the higher silanes and germanes" J. INORG. NUCL. CHEM., Bd. 27, 1965, Seiten 1911-1916, XP002517112
- E.J. SPANIER, A.G. MACDIARMID: "The conversion of Silane to higher Silanes in a silent electric discharge" INORG. CHEM, Bd. 1, Nr. 2, 1962, Seiten 432-433, XP002517113
- TAYLOR R C ET AL: "HEXACHLORODISILANE AS A PRECURSOR IN THE LPCVD OF SILICON DIOXIDE AND SILICON OXYNITRIDE FILMS", JOURNAL OF THE ELECTROCHEMICAL SOCIETY, ELECTROCHEMICAL SOCIETY, MANCHESTER, NEW HAMPSHIRE; US, vol. 136, no. 8, 1 August 1989 (1989-08-01), pages 2382-2386, XP000117260, ISSN: 0013-4651
- J.E. Bentham ET AL: "Stannic chloride: A selective chlorinating agent for silanes and germanes", INORGANIC AND NUCLEAR CHEMISTRY LETTERS., vol. 7, no. 11, 1 November 1971 (1971-11-01), pages 1077-1079, XP55365580, GB ISSN: 0020-1650, DOI: 10.1016/0020-1650(71)80096-X
- K.M. Mackay ET AL: "Germyl and digermanyl halides", Journal of Inorganic and Nuclear Chemistry, vol. 28, no. 6-7, 1 June 1966 (1966-06-01) , pages 1377-1384, XP55365587, ISSN: 0022-1902, DOI: 10.1016/0022-1902(66)80170-7

## Beschreibung

Die Erfindung betrifft ein Verfahren zur Herstellung von dimeren und/oder trimeren Germaniumverbindungen. Ferner betrifft die Erfindung die Verwendung einer Vorrichtung zur Durchführung des erfindungsgemäßen Verfahrens. Siliciumverbindungen, die in der Mikroelektronik zum Einsatz kommen, wie beispielsweise zur Herstellung von hochreinem Silicium mittels Epitaxie oder Siliciumnitrid (SiN), Siliciumoxid (SiO), Siliciumoxynitrid (SiON), Siliciumoxycarbid (SiOC) oder Siliciumcarbid (SiC), müssen besonders hohe Anforderungen an Ihre Reinheit erfüllen. Dies gilt insbesondere bei der Herstellung dünner Schichten dieser Materialien. Im genannten Anwendungsgebiet stören schon Verunreinigungen der Ausgangsverbindungen im ppb- bis ppt-Bereich. Beispielsweise ist Hexachlordisilian, in der geforderten Reinheit, im Bereich der Elektronik, der Halbleiterindustrie als auch in der pharmazeutischen Industrie eine begehrte Ausgangsverbindung.

Zur Herstellung der genannten hochreinen Verbindungen Siliciumnitrid, Siliciumoxid, Siliciumoxynitrid, Siliciumoxycarbid oder Siliciumcarbid, insbesondere von Schichten dieser Verbindungen, wird Hexachlordisilan durch Reaktion mit weiteren stickstoff-, sauerstoff- oder kohlenstoffhaltigen Precusoren umgesetzt. Auch zur Herstellung epitaktischer Silicium-Schichten, mittels Niedrigtemperaturepitaxie, wird Hexachlordisilan verwendet.

Bekannte Verfahren des Standes der Technik nutzen zur Herstellung von Halogenverbindungen des Siliciums, beispielsweise zur Herstellung des Hexachlordisilans (Disiliciumhexachlorid), die Umsetzung von Chlor oder Chlorwasserstoff mit Calciumsilicid oder auch mit Kupfersilicid. Ein weiteres Verfahren besteht in der Reaktion von Tetrachlorsilan (Siliciumtetrachlorid) beim Überleiten über geschmolzenes Silicium (Gmelin, System-Nr 15, Teil B, 1959, Seiten 658 bis 659). Nachteilig ist an beiden Verfahren die gleichsam stattfindende Chlorierung der im Calciumsilicid als auch im Silicium vorhandenen Verunreinigungen, die dann mit in das Produkt verschleppt werden. Soll das Hexachlordisilan bei der Herstellung von Halbleitern verwendet werden, sind diese Verunreinigungen unakzeptabel.

Gemäß der Offenbarung der deutschen Patentschrift DE 1 142 848, aus dem Jahr 1958, Wird höchstreines Hexachlordisilan erhalten, wenn gasförmiges Siliciumchloroform in einem Elektrodenbrenner auf 200 bis 1000 °C erhitzt und das erzeugte Gasgemisch schnell abgekühlt und kondensiert wird. Zur Erhöhung der Effizienz wird das Siliciumchloroform vor der Umsetzung mit Wasserstoff oder einem inerten Gas verdünnt.

Die deutsche Patentschrift DE 1 014 971, aus dem Jahr 1953, betrifft ein Verfahren zur Herstellung von Hexachlordisilan, bei dem Siliciumtetrachlorid mit einem porösen Siliciumformkörper bei erhöhter Temperatur, vorzugsweise bei über 1000 °C, in einem Hotwall-Reaktor umgesetzt wird.

Aus der deutschen Offenlegungsschrift DE 3 62 493 ist ein weiteres Verfahren zur Herstellung von Hexachlordisilan bekannt. Hier werden zur Herstellung des Hexachlordisilans im technischen Maßstab Siliciumlegierungen oder metallisches Silicium mit Chlor unter Einsatz eines Vibrationsreaktors bei Temperaturen zwischen 100 und 500 °C umgesetzt. D. N. Andrejew (J. für praktische Chemie, 4. Reihe, Bd. 23, 1964, Seiten 288 bis 297) beschreibt die Reaktion von Siliciumtetrachlorid (SiCl₄) in Gegenwart von Wasserstoff (H₂) unter Plasmabedingungen zu Hexachlordisilan (Si₂Cl₆) und höheren chlorierten Polysilanen. Die Reaktionsprodukte fallen als Gemisch an. Nachteilig ist bei diesem Verfahren, dass dieses Produktgemisch hochviskos bis fest anfällt und sich daher auf der Reaktorwand niederschlagen kann. Ebenfalls offenbart ist die Umsetzung von Alkylsilanen wie Methyltrichlorsilan (MTCS) in Gegenwart von Wasserstoff im Plasma zu Hexachlordisilan und einer Vielzahl ungewünschter Nebenprodukte. Beiden Ausführungsformen gemeinsam ist der nachteilige, zusätzliche Bedarf an Wasserstoff als Reduktionsmittel.

Die WO 2006/125425 A1 betrifft ein zweistufiges Verfahren zu Herstellung von Bulk-Silicium aus Halogensilanen. In der ersten Stufe werden bevorzugt Halogensilane, wie Fluor- oder Chlorsilane in Gegenwart von Wasserstoff einer Plasamentladung ausgesetzt. In der sich anschließenden zweiten Stufe wird das aus der ersten Stufe erhalten Polysilangemisch bei Temperaturen ab 400 °C, bevorzugt ab 700 °C zu Silicium pyrolysiert. K. M. Mackay et al. (J. inorg. nucl. Chem, 1966, Vol. 28 Seiten 1377 bis 1384) beschreibt die Synthese von Digermanylhalogeniden Ge₂H₅X mit X = Cl, Br, I. Dabei wird das Digerman Ge₂H₆ mit dem entsprechenden Silberhalogenid für X = Cl, Br oder mit elementarem Halogen für X = Br, I umgesetzt. Ferner kann auch ausgehend vom Digermanyliodid einen Ionenaustauschreaktion mit Silberchlorid oder -bromid erfolgen.

J. E. Bentham et al. (Inorg. nucl. chem. Letters, 1971, Vol. 7, Seiten 1077 bis 1079) beschreibt die Synthese von Ge₂H₅Cl und Ge₂H₄Cl₂ ausgehend von Ge₂H₆ und SNCl₄.

Den meisten der genannten Verfahren ist gemeinsam, dass sie bei hohen Temperaturen und unter beträchtlichem Energieaufwand ablaufen, Wasserstoff als Reduktionsmittel benötigen oder zu stark verunreinigten Rohprodukten, mit einer Vielzahl an Nebenprodukten, führen.

Aufgabe der vorliegenden Erfindung ist es, ein wirtschaftliches Verfahren zur Herstellung von dimeren und/oder trimeren Germaniumverbindungen im technischen Maßstab bereitzustellen, welches die vorgenannten Nachteile nicht aufweist, sowie die Verwendung einer Vorrichtung zur Durchführung des erfindungsgemäßen Verfahrens. Gelöst wird die Aufgabe durch das erfindungsgemäße Verfahren entsprechend den Merkmalen des Patentanspruches 1. Nachfolgend ist zum besseren Verständnis ein nicht-erfindungsgemäßes Verfahren zur Herstellung von dimeren und/oder trimeren Siliciumverbindungen beschrieben, das sich in zwei Verfahrensschritte aufgliedert. Im Verfahrensschritt a) erfolgt eine nichtthermische Plasmabehandlung einer Siliciumverbindung der allgemeinen Formel (IIa) gegebenenfalls in Gegenwart einer oder weiterer Siliciumverbindungen der allgemeinen Formel (IIIa), die insbesondere eine Wasserstoff enthaltende Verbindung ist. Auf die Zugabe von Wasserstoff (H₂) kann verzichtet werden. Dem Verfahrensschritt a) folgt im Verfahrensschritt b) die Gewinnung einer oder mehrerer reiner Siliciumverbindungen der Formel (Ia) aus der resultierenden Phase, insbesondere erfolgt eine destillative Aufarbeitung, um ein gebildetes Reaktionsprodukt, eine Siliciumverbindung der allgemeinen Formel (Ia), abzutrennen. Die Siliciumverbindung kann in hoher Reinheit und auch höchster Reinheit isoliert werden. Eine Siliciumverbindung der Formel (Ia) weist eine hohe Reinheit auf, wenn Verunreinigungen nur im ppb-Bereich vorliegen; unter höchster Reinheit werden Verunreinigungen im ppt-Bereich und darunter verstanden.

Durch eine Behandlung einer Wasserstoff, Organyl und/oder Halogen enthaltenden Siliciumverbindung der nachfolgenden allgemeinen Formel (IIa) mittels nichtthermischem Plasma können dimere und/oder trimere Siliciumverbindungen der allgemeinen Formel (Ia) erhalten werden. Diese Verbindungen werden hochselektiv, insbesondere ohne starke Verunreinigung durch Nebenprodukte, im nichtthermischen Plasma gebildet.

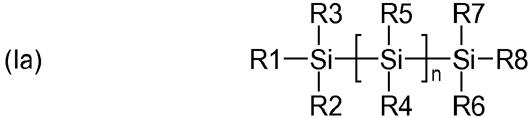

Die Reste R1 bis R8 der Siliciumverbindung der allgemeinen Formel (la) entsprechen Wasserstoff und/oder Halogen, wobei das Halogen ausgewählt ist aus Fluor, Chlor, Brom und/oder Jod, mit der Maßgabe, dass mindestens einer der Reste R1 bis R8 ein Halogenatom ist, wobei R1 bis R8 identische oder unterschiedliche Reste bezeichnen können und der Zähler n = 0 oder 1 ist. Besonders bevorzugte Verbindungen sind Hexachlordisilan, mit n = 0 und Octachlortrisilan mit n = 1, und die Reste R1 bis R8 bei beiden Verbindungen Chlor entsprechen. Weitere bevorzugte Verbindungen weisen einen Zähler n = 0 oder 1 auf, wobei die Reste R1 bis R8 alle einem Halogenatom entsprechen. In zweckmäßigen Verbindungen entsprechen die Reste R1 bis R 8 Halogen- und Wasserstoffatomen.

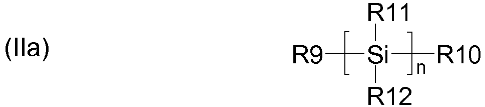

Die Reste R9 bis R12 der Siliciumverbindung der allgemeinen Formel (IIa) entsprechen Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, insbesondere enthält das Organyl Wasserstoff, oder Halogen, wobei das Halogen ausgewählt ist aus Fluor, Chlor, Brom und/oder Jod, und wobei die Reste R9 bis R12 identische oder unterschiedliche Reste bezeichnen können und der Zähler n = 1 oder 2 ist. Die besonders bevorzugte Verbindung, Siliciumtetrachlorid, weist einen Zähler von n = 1 und als Reste R9 bis R12 Chlor auf. In weiteren bevorzugten Verbindungen beträgt der Zähler n = 1 oder 2 und die Reste R9 bis R12 entsprechen Halogenatomen. Zweckmäßig sind auch Verbindungen mit Halogen- und Organylresten oder Wasserstoffatomen; oder Halogen- und Organylresten. Die Verbindungen der allgemeinen Formel (Ia) dienen als Ausgangssubstanz und als Matrix in dem Verfahren.

Durch eine Behandlung der Wasserstoff, Organyl und/oder Halogen enthaltenden Siliciumverbindungen der nachfolgenden allgemeinen Formel (IIa) in Gegenwart einer oder gegebenenfalls mehrerer weiteren Siliciumverbindungen der allgemeinen Formel (IIIa), wobei die Verbindungen der Formel (IIa) und (IIIa), insbesondere nicht identisch sind, können mittels nichtthermischem Plasma dimere und/oder trimere Siliciumverbindungen der allgemeinen Formel (Ia) erhalten werden. Die Behandlung der Siliciumverbindungen (IIa) und (IIIa) im nichtthermischen Plasma erfolgt insbesondere ohne Zugabe eines Reduktionsmittels, wie beispielsweise Wasserstoff.

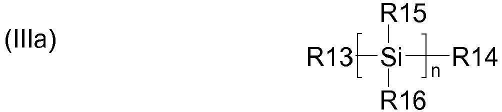

Siliciumverbindungen der allgemeinen Formel (IIIa) weisen als Reste R13 bis R16 Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, insbesondere enthält das Organyl Wasserstoff, oder die Reste weisen Halogen auf, wobei das Halogen ausgewählt ist aus Fluor, Chlor, Brom und/oder Jod und wobei die Reste R13 bis R15 identisch oder unterschiedlich sein können und der Zähler n = 1 oder 2 ist, wobei der Zähler n = 1 bevorzugt ist, insbesondere mit der Maßgabe, dass es eine Wasserstoff enthaltenden Verbindung ist. Die Bildung einer dimeren Siliciumverbindung der Formel (Ia) erfolgt überraschenderweise hochselektiv. Nebenprodukte werden nur in geringem Maße gebildet.

Als Wasserstoff enthaltenden Verbindungen gelten Siliciumverbindungen, die Wasserstoff an Silicium und/oder Wasserstoff an einen Organylrest gebunden enthalten.

Besonders bevorzugte Verbindungen der Formel (IIIa) weisen einen Zähler von n = 1 und an den Resten R13 bis R16 Chlor und Wasserstoff oder einen Alkylrest, wie beispielsweise Methyl, auf. Beispiele für diese Verbindungen sind Trichlorsilan (HSiCl₃), Dichlorsilan (H₂SiCl₂), Monochlorsilan (H₃SiCl), Monosilan (SiH₄) und Methyltrichlorsilan (MeSiCl₃) sowie Dimethyldichlorsilan (Me₂SiCl₂). In weiteren zweckmäßigen Verbindungen beträgt der Zähler n = 1 bis 2, wobei die Reste R13, R15 und R16 Halogenatomen und R14 einem Wasserstoff oder einem Alkylrest entsprechen. Werden Mischungen von Siliciumverbindungen der Formel (IIa) und (IIIa) mit einem Zähler von n = 1 und n = 2 eingesetzt, können durch Äquilibrierungsreaktionen dimere und/oder trimere Siliciumverbindungen der Formel (Ia) erhalten werden.

Im Verfahren zur Herstellung der Siliciumverbindung der Formel (Ia) entspricht die Siliciumverbindung der allgemeinen Formel (IIa), mit n = 1, keiner der folgenden Verbindungen HₘSiX₄₋ₘ (X = F, Cl, Br, I; m = 0-3), wenn die Siliciumverbindung der allgemeinen Formel (IIIa), mit n = 1, einer der Verbindungen HₘSiX₄₋ₘ (X = F, Cl, Br, I; m = 0-3) entspricht.

Es wird eine perhalogenierte Verbindungen der Formel (IIa) mit einer oder mehreren Wasserstoff enthaltende Verbindungen der Formel (IIIa) ohne Zusatz eines Reduktionsmittel im nichtthermischen Plasma zu einer Siliciumverbindung der Formel (Ia) umgesetzt und die reine, insbesondere hochreine Siliciumverbindung der Formel (Ia) gewonnen.

In einer besonders bevorzugten Ausführungsform werden dimere und/oder trimere Siliciumverbindungen der Formel (Ia) dadurch erhalten, dass Siliciumtetrachlorid (SiCl₄), der Formel (IIa), mit einer oder weiteren Wasserstoff enthaltenden Siliciumverbindungen, der Formel (IIIa), im nichtthermischen Plasma umgesetzt wird.

Das Siliciumtetrachlorid ist hier zugleich Edukt und Matrix, so dass es üblicherweise im Überschuss zur Wasserstoff enthaltenden Verbindung zugesetzt wird. Ein erheblicher Vorteil des Verfahrens ist, dass auf die Zugabe eines Reduktionsmittels, wie Wasserstoff, verzichtet werden kann. Im Gegensatz zu den bekannten Verfahren gemäß dem Stand der Technik wird ein dünnflüssiges, homogenes Reaktionsgemisch erhalten. Ferner bilden sich keine Ausfällungen oder öligen Substanzen, insbesondere verfestigt sich das Reaktionsgemisch nicht bei einer Lagerung bei Raumtemperatur. Es kommt vorteilhaft zu einer hochselektiven Bildung der dimeren Verbindung, der Formel (Ia), insbesondere des Hexachlordisilans, so dass bereits im flüssigen Reaktionsprodukt fast ausschließlich die dimere chlorierte Siliciumverbindung vorliegt. Ein weiteres Produkt oder Nebenprodukt kann Ocatchlortrisilan sein. Dies führt zu einer deutlich vereinfachten Auftrennung des Reaktionsproduktes. Es wird dadurch möglich die Produkte gezielt in reiner und hochreiner Form, insbesondere nach einer destillativen Aufreinigung, bereitzustellen. Die nach diesem Verfahren hergestellten Siliciumverbindungen sind zur Anwendung in der Halbleiterindustrie oder pharmazeutischen Industrie geeignet.

Bei der Synthese der Chlorsilane, wie beispielsweise Tetrachlorsilan (SiCl₄) und Trichlorsilan (HSiCl₃) fallen diese als Gemische der beiden Verbindungen mit weiterer siliciumhaltigen Verbindungen, wie Alkylchlorsilanen, an. Typischerweise ist in dem Gemisch Methylchlorsilan enthalten. Diese Gemische können, ohne vorherige Aufreinigung durch destillative Abtrennung der Einzelverbindungen, dem Plasma zugeführt werden. Vielmehr kann bei einer gegebenen Silanverbindung der Gehalt an Wasserstoff enthaltenden Silanverbindungen durch Zudosierung von Trichlorsilan und/oder Methylchlorsilan erhöht werden.

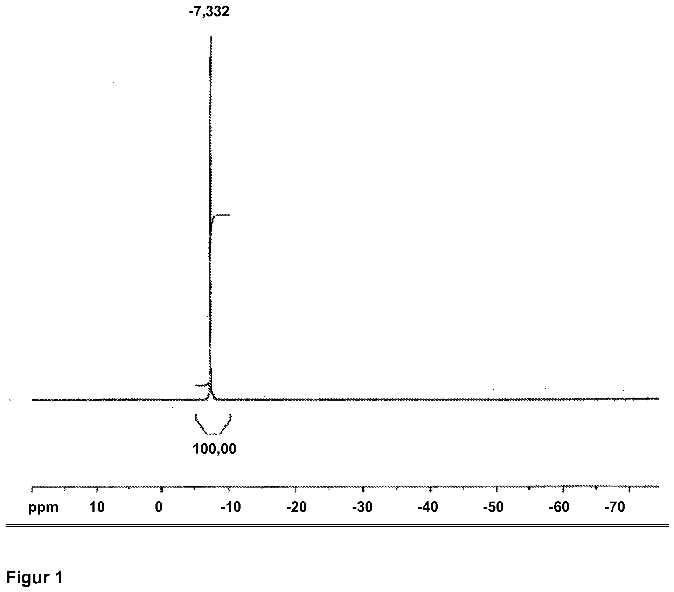

Nicht umgesetzte Edukte der allgemeinen Formel (IIa) und gegebenenfalls (IIIa) werden nach Bedarf dem nichtthermischen Plasma erneut zugeführt. Zur vollständigen Umsetzung der Edukte in die Verbindung der allgemeinen Formel (Ia) kann eine Zyklusfahrweise mit 1 bis 100 Zyklen genutzt werden, bevorzugt ist eine geringe Anzahl von 1 bis 5 Zyklen, vorzugsweise wird nur ein Zyklus durchlaufen. Die mittels der Umsetzung im nichtthermischen Plasma erhaltenen Siliciumverbindungen der allgemeinen Formel (Ia) liegen schon rein in der resultierenden Phase vor, aus der sie hochrein gewonnen werden können, insbesondere werden sie einer destillativen Aufarbeitung unterzogen. Auf diese Weise kann beispielsweise Hexachlordisilan in höchster Reinheit von den übrigen Reaktionsprodukten und Edukten isoliert werden, siehe Figur 1. Im ²⁹Si-NMR-Spektrum sind neben dem Signal des Hexachlordisilans (δ = 7,4 ± 0,1 ppm, DMSO) keine weiteren Verbindungen nachweisbar. Die Verunreinigung der Siliciumverbindungen mit anderen Metallverbindungen liegt wenigstens im ppb-Bereich bis in den ppt-Bereich, vorzugsweise im ppt-Bereich.

Das nichtthermische Plasma wird in einem Plasma-Reaktor erzeugt, in dem eine plasmaelektrische Stoffumwandlung induziert wird und basiert auf anisothermen Plasmen. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße (plasmaelektrische Stoffumwandlung). Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemäße Plasmabehandlung durchgeführt wird, liegt zwischen 1 bis 1000 mbar_{abs}, bevorzugt bei 1 bis 800 mbar_{abs}, besonders bevorzugt bei 100 bis 500 mbar_{abs}, insbesondere bei 200 bis 500 mbar_{abs}, wobei die zu behandelnde Phase vorzugsweise auf eine Temperatur von -40 °C bis 200 °C, besonders bevorzugt auf 20 bis 80 °C, ganz besonders bevorzugt auf 40 bis 60 °C eingestellt ist. Bei Germaniumverbindungen kann die entsprechende Temperatur auch höher liegen.

Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3-446-13627-4".

In der Ausführungsform des Verfahrens wird Siliciumtetrachlorid (SiCl₄) mit mindestens einer weiteren Wasserstoff enthaltenden Siliciumverbindungen der Formel (IIIa) in einem Plasmareaktor zur Gasphasenbehandlung umgesetzt, insbesondere ohne Zusatz eines Reduktionsmittels. Beispielhaft seien als Siliciumverbindungen der Formel (IIIa) Trichlorsilan, Dichlorsilan, Monochlorsilan, Monosilan, Methyltrichlorsilan, Dimethyldichlorsilan, Trimethylchlorsilan und/oder Propyltrichlorsilan aufgezählt.

Eine alternative, bevorzugte Ausführungsform sieht die Umsetzung von Siliciumtetrachlorid nur mit weiteren Hydrogensilanen, wie Trichlorsilan, vor. Weitere bevorzugte Ausführungsformen sehen die Umsetzung von Siliciumtetrachlorid nur mit Organylgruppen enthaltenden Silanen vor, beispielsweise wird Methyltrichlorsilan dem Tetrachlorsilan zugemischt und anschließend dem Reaktor zugeführt. Beide alternative Ausführungsformen erfolgen insbesondere ohne Zusatz eines Reduktionsmittels.

Allgemein bevorzugte Verfahrensvarianten sehen eine Umsetzung des Siliciumtetrachlorids mit Siliciumverbindungen der allgemeinen Formel (IIIa) vor, wobei beispielsweise Hydrogensilane, wie Trichlorsilan und/oder alkylhaltige Siliciumverbindungen, wie Methyltrichlorsilan einer nichtthermischen Plasmabehandlung, insbesondere ohne Zusatz eines Reduktionsmittels, unterzogen werden.

Ein weiterer Vorteil der genannten Verfahren ist, dass auf den Zusatz von teuren, inerten Edelgasen verzichtet werden kann. Alternativ kann ein Schleppgas, vorzugsweise ein unter Druck stehendes Inertgas, wie Stickstoff, Argon, ein anderes Edelgas oder Mischungen dieser zugesetzt werden.

Die im Verfahrensschritt a) gebildete Siliciumverbindung der allgemeinen Formel (Ia) wird in einem Auffangbehälter der Vorrichtung zur Durchführung des Verfahrens angereichert, beispielsweise im Sumpf der Vorrichtung und einer destillativen Aufarbeitung zugeführt. Die Verfahrensschritte a) und/oder b) können diskontinuierlich oder kontinuierlich durchgeführt werden. Besonders wirtschaftlich ist eine Verfahrensführung, bei der die Verfahrensschritte a) und b) kontinuierlich erfolgen. Die Verbindungen der Formel (IIa) und gegebenenfalls der Formel (IIIa) werden dem Plasmareaktor zur Gasphasenbehandlung kontinuierlich zugeführt. Aus der sich bildenden Phase werden die höher siedenden Reaktionsprodukte in einem Auffangbehälter abgeschieden. Es kann zweckmäßig sein, zu Beginn des Verfahrens die Verbindung der Formel (Ia) im Auffangbehälter zunächst anzureichern, als auch nicht umgesetzte Verbindungen der Formel (IIa) und/oder (IIIa) in den Reaktor zurückzuleiten. Überprüft werden kann dies, indem Proben entnommen und mittels FT-IR oder NMR-Spektroskopie analysiert werden. So kann man den Prozess geeigneterweise auch kontinuierlich ("online-Analytik") überwachen. Sobald die Verbindung der Formel (Ia) eine ausreichende Konzentration im Auffangbehälter ("Sumpf") erreicht hat, kann die destillative Aufarbeitung, zur Abtrennung der Siliciumverbindung der allgemeinen Formel (Ia) in kontinuierlicher oder diskontinuierlicher Betriebsweise erfolgen. Für eine diskontinuierliche destillative Aufarbeitung ist eine Kolonne zur Auftrennung ausreichend. Dazu wird die Verbindung am Kopf einer Kolonne mit ausreichender Anzahl an Trennstufen in hoher oder höchster Reinheit entnommen. Die geforderte Reinheit kann mittels GC, IR, NMR, ICP-MS oder durch Widerstandsmessung bzw. GD-MS nach Abscheidung des Si überprüft werden.

Die kontinuierliche Aufarbeitung der Verfahrensprodukte erfolgt in einem Kolonnensystem mit mindestens zwei Kolonnen, bevorzugt in einem System mit mindestens 3 Kolonnen. Auf diese Weise kann beispielsweise das ebenfalls bei der Reaktion gebildete Chlorwasserstoffgas (HCl) über eine so genannte Leichtsiederkolonne über Kopf, erste Kolonne, abgetrennt und das aus dem Sumpf aufgefangene Gemisch in seine Bestandteile aufgetrennt werden, indem Siliciumtetrachlorid (SiCl₄) am Kopf einer zweiten Kolonne und Hexachlordisilan (Si₂Cl₆) am Kopf einer dritten Kolonne destillativ abgetrennt werden gegebenenfalls kann zur Abtrennung des Octachlortrisilans eine vierte Kolonne zugeschaltet werden. Auf diese Weise kann das aus dem Plasmareaktor erhaltene Reaktionsgemisch durch Rektifikation getrennt und das Reaktionsprodukt Hexachlordisilan oder Octachlortrisilan in der gewünschten Reinheit erhalten werden. Die destillative Aufarbeitung der Siliciumverbindung der Formel (Ia) kann sowohl unter Normaldruck als auch unter Unterdruck oder Überdruck erfolgen, insbesondere bei einem Druck zwischen 1 bis 1500 mbar_{abs}. Bevorzugte Drücke liegen zwischen 40 bis 250 mbar_{abs}, insbesondere zwischen 40 bis 150 mbar_{abs}, vorzugsweise zwischen 40 bis 100 mbar_{abs}. Die Kopftemperatur der Kolonne zur destillativen Aufarbeitung der Siliciumverbindung der Formel (Ia) unter Vakuum weist dabei eine Kopftemperatur zwischen 50 und 250 °C auf, insbesondere ist das Vakuum so eingestellt, dass die Temperatur zwischen 50 und 150 °C, besonders bevorzugt zwischen 50 und 110 °C während der Isolierung der Verbindung der Formel (Ia) liegt. Die ohnehin nicht stark verunreinigten Verfahrensprodukte lassen sich durch die destillative Aufarbeitung in sehr hoher bis höchster Reinheit isolieren. Die entsprechenden Temperaturen zur Aufarbeitung der Germaniumverbindungen der Formel (Ib) können etwas erhöht sein.

Die nach dem Verfahren hergestellte hochreine oder höchstreine dimere und/oder trimere Siliciumverbindung der allgemeinen Formel (Ia) eignet sich in hohem Maße zur Verwendung in der Herstellung von Siliciumnitrid, Siliciumoxynitrid, Siliciumcarbid, Siliciumoxycarbid oder Siliciumoxid, insbesondere zur Herstellung von Schichten dieser Materialien sowie zur Herstellung von epitaktischen Schichten, bevorzugt durch Niedrigtemperaturepitaxie. Diese Schichten lassen sich beispielsweise über Chemical Vapor Deposition (CVD) herstellen. Die nach dem Verfahren hergestellten hochreinen oder höchstreinen dimeren und/oder trimeren Siliciumverbindungen der allgemeinen Formel (la) eignen sich vorzugsweise auch als Ausgangssubstanz für die Herstellung von hochreinem Disilan (Si₂H₆) oder Trisilan (Si₃H₈).

Entsprechend dem allgemeinen Verfahren können erfindungsgemäß ebenfalls hochreine Germaniumverbindungen der allgemeinen Formel (Ib) aus Germaniumverbindungen der allgemeinen Formeln (IIb) und (IIIb) erhalten werden. Dimere und/oder trimere Germaniumverbindungen der allgemeinen Formel (Ib) 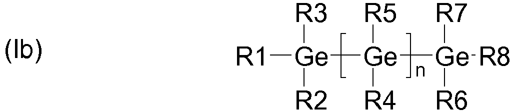 mit R1 bis R8 Wasserstoff und/oder Halogen, wobei das Halogen ausgewählt ist aus Chlor, Brom und/oder Jod, wobei R1 bis R8 identische oder unterschiedliche Reste in der Formel (Ib) bezeichnen, mit der Maßgabe, dass mindestens einer der Reste R1 bis R8 ein Halogen ist, und n = 0 oder 1 ist, können hergestellt werden, indem
a) eine Germaniumverbindung der allgemeinen Formel (IIb) 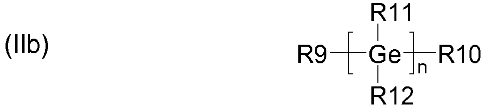 mit R9 bis R12 Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, und/oder Halogen entsprechen, und das Halogen ausgewählt ist aus Chlor, Brom und/oder Jod, wobei R9 bis R12 identische oder unterschiedliche Reste in der Formel (IIb) bezeichnen und n = 1 oder 2 ist,
   - und die Germaniumverbindung der Formel (IIb) in Gegenwart einer oder mehrerer Verbindungen der allgemeinen Formel (IIIb) 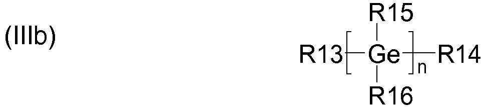 mit R13 bis R16 Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, und/oder Halogen entsprechen, und das Halogen ausgewählt ist aus Chlor, Brom und/oder Jod, wobei R13 bis R16 identische oder unterschiedliche Reste der Formel (IIIb) bezeichnen und n = 1 oder 2, insbesondere mit der Maßgabe, dass es eine Wasserstoff enthaltende Verbindung ist, einem nichtthermischen Plasma ausgesetzt und
b) aus der resultierenden Phase eine oder mehrere reine Germaniumverbindungen der allgemeinen Formel (Ib) gewonnen werden.

Insbesondere wird die Phase im Verfahrensschritt b) einer destillativen Aufarbeitung unterzogen.

Alle oben genannten Verfahren und Ausführungsformen der Verfahren für die Siliciumverbindungen lassen sich auf Germaniumverbindungen der allgemeinen Formel (IIb) und (IIIb) zur Herstellung von Germaniumverbindungen der allgemeinen Formel (Ib) übertragen, so dass erfindungsgemäß hochreine Germaniumverbindungen, insbesondere Ge₂Cl₆ und Ge₃Cl₈, herstellbar sind. Als Edukte kommen hier erfindungsgemäß perhalogenierte Germaniumverbindungen, insbesondere Germaniumtetrachlorid, Germaniumtetrafluorid oder gemischte Halogenverbindungen, die zusätzlich Organylgruppen und/oder Wasserstoff enthalten als Verbindungen der Formel (IIb) und Wasserstoff enthaltende Verbindungen der allgemeinen Formel (IIIb) in Betracht. Diese Verbindungen können, insbesondere nach einer Aufreinigung, zur Dotierung von Halbleitern, insbesondere von Silicium, oder zur Herstellung von Nanostrukturen verwendet werden.

Die Vorrichtung umfasst einen Reaktor zur Erzeugung des nichtthermischen Plasmas, einen Auffangbehälter und ein Kolonnensystem zur destillativen Aufarbeitung, wobei das Kolonnensystem für die kontinuierliche Verfahrensführung mindestens zwei Kolonnen, insbesondere mindestens 3 Kolonnen umfasst. In einer zweckmäßigen Variante kann das Kolonnensystem vier Kolonnen umfassen. Bei der diskontinuierlichen Verfahrensführung ist eine Kolonne ausreichend. Die Kolonnen sind beispielsweise Rektifikationskolonnen.

Die Vorrichtung ist insbesondere zur Durchführung des erfindungsgemäßen Verfahrens geeignet, wobei die Umsetzung der Siliciumverbindung der Formel (IIa) mit gegebenenfalls einer oder mehreren Verbindungen der Formel (IIIa) im Verfahrensschritt a) im Reaktor erfolgt. Die Umsetzungsprodukte können je nach Siedepunkt in einem, dem Reaktor zugeordneten, Auffangbehälter angereichert werden oder auch direkt über ein, der Vorrichtung zugeordnetes, Kolonnensystem im Verfahrensschritt b) teilweise direkt aus der Vorrichtung entfernt werden.

Durch Einsatz des Kolonnensystems in der kontinuierlichen Verfahrensführung kann beispielsweise Chlorwasserstoffgas über eine Leichtsiederkolonne am Kopf der ersten Kolonne direkt aus der Vorrichtung abgezogen werden, anschließend kann nicht umgesetztes Tetrachlorsilan am Kopf der zweiten Kolonne entnommen werden und die höher siedenden Umsetzungsprodukte der allgemeinen Formel (Ia) am Kopf der dritten Kolonne. Werden mehrere höher siedende Umsetzungsprodukte der Formel (Ia) isoliert kann eine vierte Kolonne zugeordnet sein.

Ferner können in der Vorrichtung neben dem Reaktor auch ein oder mehrere weitere Reaktoren zum Einsatz kommen, die in Reihe oder parallel geschaltet werden. Mindestens ein Reaktor der Vorrichtung ist ein Ozonisator. Ein großer Vorteil besteht in der alternativ möglichen Verwendung von handelsüblichen Ozonisatoren, so dass die Investitionskosten wesentlich gesenkt werden. Die Reaktoren sind zweckmäßig mit Glasrohren, insbesondere mit Quarzglasrohren ausgestattet, wobei die Rohre bevorzugt parallel bzw. koaxial angeordnet und mittels Spacern aus inertem Material beabstandet sind. Als inertes Material eignet sich insbesondere Teflon oder Glas. Es ist bekannt, dass die eingekoppelte Elektronenenergie für die Plasmaentladung "E" abhängig vom Produkt aus Druck "p" und Elektrodenabstand "d" (p·d) ist. Für das erfindungsgemäße Verfahren liegt das Produkt aus Elektrodenabstand und Druck in der Regel im Bereich von 0,001 bis 300 mm·bar, vorzugsweise von 0,05 bis 100 mm·bar, besonders bevorzugt bei 0,08 bis 0,3 mm·bar, insbesondere bei 0,1 bis 0,2 mm·bar. Die Entladung kann mittels verschiedenartiger Wechselspannungen oder gepulster Spannungen von 1 bis 10⁶ V angeregt werden. Gleichfalls kann der Kurvenverlauf der Spannung u. a. rechteckig, trapezförmig, gepulst oder stückweise aus einzelnen zeitlichen Verläufen zusammengesetzt sein. Besonders geeignet sind pulsförmige Anregungsspannungen, sie ermöglichen eine gleichzeitige Ausbildung der Entladung im gesamten Entladungsraum des Reaktors. Die Impulsdauer beim Pulsbetrieb richtet sich nach dem Gassystem, sie liegt bevorzugt zwischen 10 ns und 1ms. Bevorzugte Spannungsamplituden liegen bei 10 Vp bis 100 kVp, bevorzugt 100 Vp bis 10 Vp, insbesondere bei 50 bis 5 Vp, in einem Mikrosystem. Die Frequenz der Wechselspannung kann zwischen 10 MHz und 10 ns-Impulsen (Tastverhältnis 10:1) bis zu niedrigen Frequenzen im Bereich von 10 bis 0,01 Hz eingestellt werden. Beispielsweise kann am Reaktor eine Wechselspannung mit einer Frequenz von 1,9 kHz und einer Amplitude von 35 kV "Peak to Peak" angelegt werden. Der Leistungseintrag beträgt ungefähr 40 W.

Die nach dem erfindungsgemäßen Verfahren hergestellten Germaniumverbindungen der Formel (Ib) sind zur Anwendung in der Halbleiterindustrie oder Pharmazeutischen Industrie geeignet, da sie Verunreinigungen nur im ppb-Bereich, bevorzugt im ppt-Bereich oder darunter aufweisen. Die Verbindungen können in hoher und höchster Reinheit hergestellt werden, weil die Verbindungen gemäß dem erfindungsgemäßen Verfahren überraschend selektiv gebildet werden und somit nur wenige Nebenprodukte in geringen Mengen die Aufarbeitung der Verfahrensprodukte stören.

Die hergestellten Siliciumverbindungen der Formel (Ia) eignen sich zur Herstellung von Siliciumnitrid, Siliciumoxynitrid, Siliciumcarbid, Siliciumoxycarbid oder Siliciumoxid, insbesondere zur Herstellung von Schichten aus Siliciumnitrid, Siliciumoxynitrid, Siliciumcarbid, Siliciumoxycarbid oder Siliciumoxid. Neben Hexachlordisilan und/oder Octachlortrisilan können zweckmäßig auch alle weiteren Siliciumverbindungen der Formel (Ia) zur Herstellung der oben genannten Schichten verwendet werden. Ebenfalls können die hergestellten Siliciumverbindungen der allgemeinen Formel (Ia), insbesondere das Hexchlordisilan und das Octachlortrisilan, als Ausgangssubstanz zur Herstellung von Disilan oder Trisilan eingesetzt werden.

Das folgende Referenzbeispiel erläutert das Verfahren näher.

### Referenzbeispiel 1:

Mit Methyltrichlorsilan (MeSiCl₃) angereichertes Siliciumtetrachlorid (SiCl₄), wobei Siliciumtetrachlorid vorzugsweise im Überschuss vorliegt, wird kontinuierlich verdampft und in ein nichtthermisches Plasma einer Gasentladungsstrecke eines Quarzglasreaktors geführt. Die Gasphase wird mit circa 250 ml/h durch den Reaktor geführt. Während die Gasphase durch den Reaktor strömt wird eine Wechselspannung mit einer Frequenz von 1,9 kHz und eine Amplitude von 35 kV "Peak to Peak" angelegt. Der Leistungseintrag in den Reaktor beträgt etwa 40 W. Der Betriebsdruck wird auf etwa 300 mbar eingestellt. Nach Durchlaufen des Reaktors wird die Reaktionsmischung in einem Auffangbehälter in flüssiger Form gesammelt. Das Gaschromatogramm der Reaktionsmischung zeigt nur ein Signal für höhermolekulare Siliciumverbindungen und kann Hexachlordisilan zugeordnet werden. Die Destillation erfolgt diskontinuierlich in einer Destillationsapparatur mit einer 50 cm Kolonne mit Sulzer-Metallpackung. Bei einer Sumpftemperatur von etwa 70 °C und einem Druck von 750 mbar_{abs} wird bei einer Kopftemperatur von etwa 50 °C Siliciumtetrachlorid abdestilliert. Anschließend wird der Druck auf etwa 65 mbar_{abs} erniedrigt und bei einer Sumpftemperatur um 80 °C reines Hexachlordisilan abdestilliert. Die Kopftemperatur liegt um 70 °C. Der Gehalt an metallischen Verunreinigungen entspricht dabei der Nachweisgrenze im IPC-MS. Das ²⁹Si-NMR Spektrum zeigt nur ein Signal für Hexachlordisilan bei -7,4 ppm, siehe Figur 1.

Die Figur 1 stellt dar: 99,34 MHz-²⁹Si-NMR Spektrum von Hexachlordisilan in DMSO.

## Patentansprüche

1. Verfahren zur Herstellung von Germaniumverbindungen der allgemeinen Formel (Ib) 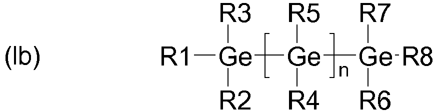 mit R1 bis R8 Wasserstoff und/oder Halogen, wobei das Halogen ausgewählt ist aus Chlor, Brom und/oder Jod, wobei R1 bis R8 identische oder unterschiedliche Reste in der Formel (Ib) bezeichnen, mit der Maßgabe, dass mindestens einer der Reste R1 bis R8 ein Halogen ist, und n = 0 oder 1 ist, wobei
a) eine Germaniumverbindung der allgemeinen Formel (IIb) 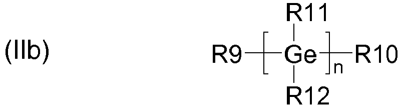 mit R9 bis R12 Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, und/oder Halogen entsprechen, und das Halogen ausgewählt ist aus Chlor, Brom und/oder Jod, wobei R9 bis R12 identische oder unterschiedliche Reste in der Formel (IIb) bezeichnen und n = 1 oder 2 ist,
- die Germaniumverbindung der Formel (IIb) in Gegenwart einer oder mehrerer Verbindungen der allgemeinen Formel (IIIb) 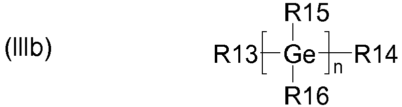 mit R13 bis R16 Wasserstoff, Organyl, wobei das Organyl ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfasst, und/oder Halogen entsprechen, und das Halogen ausgewählt ist aus Chlor, Brom und/oder Jod, wobei R13 bis R16 identische oder unterschiedliche Reste der Formel (IIIb) bezeichnen und n = 1 oder 2, insbesondere mit der Maßgabe, dass es eine Wasserstoff enthaltende Verbindung ist
einem nichtthermischen Plasma ausgesetzt und
b) aus der resultierenden Phase eine oder mehrere Germaniumverbindungen der allgemeinen Formel (Ib) gewonnen werden.

2. Verfahren nach Anspruch 1,
**dadurch gekennzeichnet,**
**dass** im Verfahrensschritt b) die Phase einer destillativen Aufarbeitung unterzogen wird.

3. Verfahren nach Anspruch 2,
**dadurch gekennzeichnet,**
**dass** die destillative Aufarbeitung im Schritt b) bei kontinuierlicher Verfahrensführung in einem Kolonnensystem mit mindestens zwei Kolonnen und bei diskontinuierlicher mit mindestens einer Kolonne erfolgt.

4. Verfahren nach einem der Ansprüche 2 oder 3,
**dadurch gekennzeichnet,**
**dass** die destillative Aufarbeitung unter Normaldruck, Unterdruck oder Überdruck erfolgt.

5. Verfahren nach einem der Ansprüche 2 bis 4,
**dadurch gekennzeichnet,**
**dass** die destillative Aufarbeitung bei einem Druck zwischen 1 bis 1500 mbar_{abs} erfolgt.

6. Verwendung einer Vorrichtung zur kontinuierlichen Durchführung des Verfahrens gemäß den Ansprüchen 1 bis 5, wobei die Vorrichtung einen Reaktor zur Erzeugung des nichtthermischen Plasmas, einen diesem zugeordneten Auffangbehälter und ein zugeordnetes Kolonnensystem zur destillativen Aufarbeitung mit mindestens zwei Kolonnen aufweist, der Reaktor ein Ozonisator ist und mit Glasrohren ausgestattet ist, die Glasrohre im Reaktor durch Spacer aus inertem Material beabstandet sind und das Material der Spacer Glas oder Teflon ist.

7. Verwendung nach Anspruch 6,
**dadurch gekennzeichnet,**
**dass** der Reaktor mit Quarzglasrohren ausgestattet ist.

## Claims

1. Process for preparing germanium compounds of the general formula (Ib) 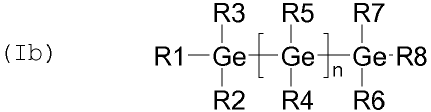 where R1 to R8 are each hydrogen and/or halogen, where the halogen is selected from chlorine, bromine and/or iodine, where R1 to R8 denote identical or different radicals in the formula (Ib), with the proviso that at least one of the R1 to R8 radicals is a halogen, and n = 0 or 1, wherein
a) a germanium compound of the general formula (IIb) 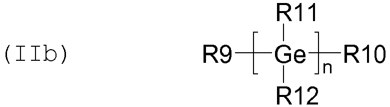 where R9 to R12 are each hydrogen, organyl, where the organyl comprises a linear, branched and/or cyclic alkyl having 1 to 18 carbon atoms, linear, branched and/or cyclic alkenyl having 2 to 8 carbon atoms, unsubstituted or substituted aryl and/or corresponding benzyl, and/or halogen, and the halogen is selected from chlorine, bromine and/or iodine, where R9 to R12 denote identical or different radicals in the formula (IIb) and n = 1 or 2,
- the germanium compound of the formula (IIb) in the presence of one or more compounds of the general formula (IIIb) 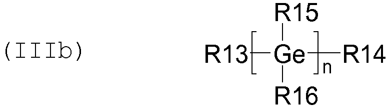 where R13 to R16 are each hydrogen, organyl, where the organyl comprises a linear, branched and/or cyclic alkyl having 1 to 18 carbon atoms, linear, branched and/or cyclic alkenyl having 2 to 8 carbon atoms, unsubstituted or substituted aryl and/or corresponding benzyl, and/or halogen, and the halogen is selected from chlorine, bromine and/or iodine, where R13 to R16 denote identical or different radicals of the formula (IIIb) and n = 1 or 2, especially with the proviso that it is a hydrogen-containing compound,
is exposed to a nonthermal plasma and
b) one or more germanium compounds of the general formula (Ib) are obtained from the resulting phase.

2. Process according to Claim 1,
**characterized in that**
the phase is subjected to a distillative workup in process step b).

3. Process according to Claim 2,
**characterized in that**
the distillative workup in step b) in a continuous process regime is effected in a column system comprising at least two columns, and in a batchwise process regime with at least one column.

4. Process according to either of Claims 2 and 3,
**characterized in that**
the distillative workup is effected under standard pressure, reduced pressure or elevated pressure.

5. Process according to any one of Claims 2 to 4,
**characterized in that**
the distillative workup is effected at a pressure in the range from 1 to 1500 mbar_{abs}.

6. Use of an apparatus for continuous performance of the process according to Claims 1 to 5,
wherein the apparatus comprises a reactor for generating the nonthermal plasma, a collecting vessel assigned thereto and a column system for distillative workup which is assigned thereto and comprises at least two columns, the reactor is an ozonizer and is equipped with glass tubes, the glass tubes in the reactor are spaced apart by spacers composed of inert material and the material of the spacers is glass or Teflon.

7. Use according to Claim 6,
**characterized in that**
the reactor is equipped with quartz glass tubes.

## Revendications

1. Procédé de fabrication de composés de germanium de formule générale (Ib) 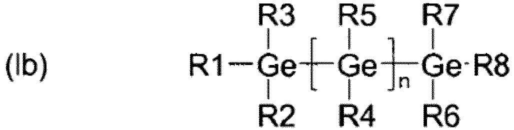 dans laquelle R1 à R8 représentent hydrogène et/ou halogène, l'halogène étant choisi parmi chlore, brome et/ou iode, R1 à R8 représentant des radicaux identiques ou différents dans la formule (Ib), à condition qu'au moins un des radicaux R1 à R8 soit un halogène, et n = 0 ou 1, selon lequel
a) un composé de germanium de formule générale (IIb) 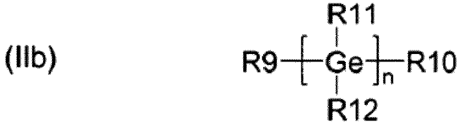 dans laquelle R9 à R12 représentent hydrogène, organyle, l'organyle comprenant un alkyle linéaire, ramifié et/ou cyclique de 1 à 18 atomes de carbone, un alcényle linéaire, ramifié et/ou cyclique de 2 à 8 atomes de carbone, un aryle non substitué ou substitué et/ou un benzyle correspondant, et/ou halogène, l'halogène étant choisi parmi chlore, brome et/ou iode, R9 à R12 représentant des radicaux identiques ou différents dans la formule (IIb), et n = 1 ou 2,
- le composé de germanium de formule (IIb) est exposé à un plasma non thermique en présence d'un ou de plusieurs composés de formule générale (IIIb) 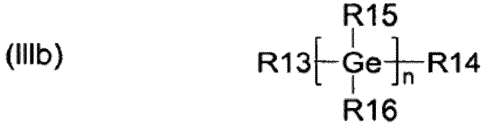 dans laquelle R13 à R16 représentent hydrogène, organyle, l'organyle comprenant un alkyle linéaire, ramifié et/ou cyclique de 1 à 18 atomes de carbone, un alcényle linéaire, ramifié et/ou cyclique de 2 à 8 atomes de carbone, un aryle non substitué ou substitué et/ou un benzyle correspondant, et/ou halogène, l'halogène étant choisi parmi chlore, brome et/ou iode, R13 à R16 représentant des radicaux identiques ou différents dans la formule (IIIb), et n = 1 ou 2, notamment à condition qu'il s'agisse d'un composé contenant de l'hydrogène, et
b) un ou plusieurs composés de germanium de formule générale (Ib) sont obtenus à partir de la phase résultante.

2. Procédé selon la revendication 1, **caractérisé en ce qu'**à l'étape de procédé b), la phase est soumise à un traitement de distillation.

3. Procédé selon la revendication 2, **caractérisé en ce que** le traitement de distillation à l'étape b) a lieu en mode continu dans un système de colonnes comprenant au moins deux colonnes et en mode discontinu comprenant au moins une colonne.

4. Procédé selon l'une quelconque des revendications 2 ou 3, **caractérisé en ce que** le traitement de distillation a lieu sous pression normale, sous-pression ou surpression.

5. Procédé selon l'une quelconque des revendications 2 à 4, **caractérisé en ce que** le traitement de distillation a lieu à une pression comprise entre 1 et 1 500 mbar_{abs}.

6. Utilisation d'un dispositif pour la réalisation continue du procédé selon les revendications 1 à 5, le dispositif comprenant un réacteur pour la génération du plasma non thermique, un contenant de collecte attribué à celui-ci et un système de colonnes correspondant pour le traitement de distillation comprenant au moins deux colonnes, le réacteur étant un ozonisateur et étant équipé de tubes en verre, les tubes en verre étant espacés par des espaceurs en matériau inerte dans le réacteur et le matériau des espaceurs étant le verre ou le Téflon.

7. Utilisation selon la revendication 6, **caractérisée en ce que** le réacteur est équipé de tubes en verre de quartz.
